Europäisches Patentamt

European Patent Office

Office européen des brevets

(19)

(11) Veröffentlichungsnummer: **0 147 832**
**B1**

(12)

# EUROPÄISCHE PATENTSCHRIFT

(45) Veröffentlichungstag der Patentschrift:
26.07.89

(21) Anmeldenummer: 84116109.4

(22) Anmeldetag: 21.12.84

(51) Int. Cl.⁴: **A 01 B 63/22,** A 01 B 73/00

(54) Landwirtschaftlich nutzbares Arbeitsgerät.

(30) Priorität: 27.12.83 US 566096

(43) Veröffentlichungstag der Anmeldung:
10.07.85 Patentblatt 85/28

(45) Bekanntmachung des Hinweises auf die Patenterteilung:
26.07.89 Patentblatt 89/30

(84) Benannte Vertragsstaaten:
DE FR GB

(56) Entgegenhaltungen:
DE-A- 3 034 870
FR-A- 2 294 619
US-A- 3 308 611
US-A- 3 583 495
US-A- 3 590 928
US-A- 3 653 193
US-A- 3 672 701
US-A- 4 319 643
US-A- 4 364 581

(73) Patentinhaber: DEERE & COMPANY, 1 John Deere Road,
Moline Illinois 61265 (US)

(72) Erfinder: Pratt, Ronald Lee, 909 - 32nd Avenue A, Moline
Illinois 61265 (US)

(74) Vertreter: Feldmann, Bernhard, DEERE & COMPANY
European Office, Patent Department
Steubenstrasse 36-42 Postfach 503,
D-6800 Mannheim 1 (DE)

## Beschreibung

Die Erfindung bezieht sich auf ein an einen Schlepper anschließbares, landwirtschaftlich nutzbares Arbeitsgerät mit einem zwei horizontal nach vorne in eine Transportstellung verschwenkbare, mit Bezug auf die Fahrtrichtung in der Arbeitsstellung quer verlaufende Träger aufweisenden Geräterahmen zur Aufnahme von Arbeitswerkzeugen oder Sammelbehältern, wobei die über Laufräder auf dem Boden abstützbaren Träger an einem auf der Längsmittelebene verlaufenden, mit dem Schlepper verbindbaren Längsträger horizontal schwenkbar angeschlossen sind und hinter den beiden quer verlaufenden Trägern eine Laufräder aufweisende, ebenfalls quer verlaufende Laufradachse mit Bezug auf die Längsmittelebene des Arbeitsgerätes mittig und mittels eines Hydromotors über einen Tragteil höhenverstellbar an den Längsträger angeschlossen ist.

Bei diesem Arbeitsgerät (US-A-4 319 643) ist der Längsträger als Gleitschiene ausgebildet, und die beiden Träger sind an einem auf dem Längsträger verschiebbaren Gleitstück angelenkt. Beim Verstellen der Träger aus der quer verlaufenden Arbeitsstellung nach vorne in die Transportstellung verschiebt sich das Gleitstück auf dem Längsträger nach hinten bis an das rückwärtige Ende des Längsträgers. Da aber die Laufradachse sich in der Arbeitsstellung der Träger unmittelbar hinter den Arbeitswerkzeugen befindet, muß zum Verstellen der Träger in die Transportstellung das Arbeitsgerät zunächst so höhenverstellt werden, daß die Arbeitswerkzeuge über die an der Laufradachse vorgesehenen Laufräder geschoben werden können. Hierzu ist der Tragteil mit Hydromotor so auszubilden, daß er diese Bewegung nicht behindert, andererseits jedoch zuläßt, daß der Längsträger in eine relativ tiefliegende Arbeitsstellung abgesenkt werden kann. In der Arbeitsstellung liegt der Längsträger über eine Stütze satt auf dem hierzu entsprechend ausgebildeten Tragteil auf. In der Arbeitsstellung ist der als Hydraulikzylinder ausgebildete Hydromotor daher druckentlastet. Er muß aber relativ lang mit an seinen beiden Enden jeweils austretenden Kolbenstangen ausgebildet sein, um die hohe Transportstellung und relativ niedrige Arbeitsstellung zu ermöglichen, so daß die Anlenkstelle des Tragteils etwa mittig am Längsträger und die Anlenkstelle des Hydraulikzylinders im Bereich des rückwärtigen Endes des Längsträgers vorgesehen sein müssen. Hinzu kommt, daß die Anlenkstellen so ausgebildet sein müssen, daß sie die Schiebebewegung des Gleitstückes zulassen. Damit ergibt sich eine aufwendige Anordnung.

Andererseits ist es bereits bekannt (US-A-3 672 701), ein einziges Laufrad am Ende einer Scheibenegge über ein Parallelogrammgestänge anzuschließen, wobei die Arbeitsstellung und Transportstellung der Scheibenegge über einen doppelseitig beaufschlagbaren Hubzylinder großer Länge eingestellt wird. Der Hubzylinder ist dabei immer druckbeaufschlagt.

Die mit der Erfindung zu lösende Aufgabe wird in einer einfachen Anordnung des Tragteils am Längsträger gesehen. Diese Aufgabe ist dadurch gelöst worden, daß der Tragteil in der Arbeitsstellung als rückwärtige Verlängerung des Längsträgers ausgebildet ist und mit seiner nach vorne gerichteten Stirnfläche gegen die nach hinten gerichtete Stirnfläche des Längsträgers anliegt. Auf diese Weise ist der bekannte Längsträger praktisch klappbar ausgebildet und kann in seiner Arbeitsstellung als einstückig angesehen werden, da er dann mit dem Tragteil starr verbunden ist und es einer Beaufschlagung des Hydromotors nicht bedarf.

Zweckmäßig ist der Tragteil in der Arbeitsstellung koaxial zu dem Längsträger ausgerichtet und liegt auf der gleichen horizontal verlaufenden Ebene.

Für ein Arbeitsgerät, bei dem der Tragteil über einen Gelenkbolzen an den Längsträger und ein Hydraulikzylinder einenends an den Längsträger und anderenends an den Tragteil angeschlossen ist, wird vorgeschlagen, daß der Gelenkbolzen im Bereich der unteren gegenüberliegenden Kanten des Längsträgers und des Tragteils vorgesehen ist, wobei der Gelenkbolzen in der Transportstellung hinter den beiden Trägern zur Aufnahme der Arbeitswerkzeuge bzw. Sammelbehälter angeordnet ist.

Dadurch, daß der Tragteil an seinem hinteren Ende mit Bezug auf die Arbeitsstellung nach unten abgewinkelt ist und in der Transportstellung eine in etwa vertikal verlaufende Lage einnimmt, wird erfindungsgemäß erreicht, daß in der Arbeitsstellung die Laufräder des Tragteils weiter nach hinten stehen und so eine stabilere Lage des Arbeitsgerätes erreicht wird, ohne daß sie die Anpassung der Träger an mögliche Bodenunebenheiten beeinträchtigen. In der Transportstellung dagegen werden die Laufräder relativ weit nach vorne geschwenkt.

In einfacher Weise kann der Tragteil als U-Profilträger ausgebildet sein und zwischen seinen Schenkeln den Hydraulikzylinder aufnehmen.

Im folgenden wird die Erfindung anhand von lediglich einen Ausführungsweg darstellenden Zeichnungen näher erläutert. Es zeigt:

Fig. 1 eine Draufsicht eines Arbeitsgerätes mit verschwenkbaren Rahmenteilen zur Aufnahme von Sammelbehältern für Saatgut und Düngemittel,

Fig. 2 eine Darstellung des Arbeitsgerätes in einer Transportstellung,

Fig. 3 eine Teilansicht zur Verstellung der hinteren Laufradachse des Arbeitsgerätes.

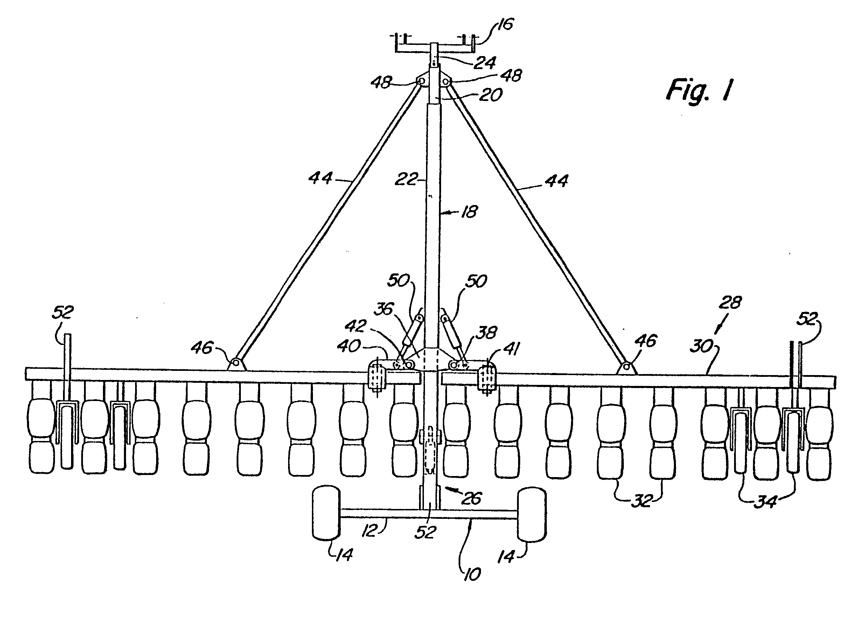

In der Zeichnung ist in Fig. 1 mit 10 eine Laufradanordnung bezeichnet, zu der eine Laufradachse 12 gehört, an der endseitig zwei Laufräder 14 angeordnet sind. Die Laufradanordnung 10 ist am hinteren Ende eines Längsträgers 18 angeschlossen, an dessen vorderem Ende eine Anhängevorrichtung 16 zum Anschluß an einen Schlepper angeschlossen ist.

Der Längsträger 18 kann, wie aus Fig. 1 hervorgeht, teleskopartig ausgebildet sein und hierzu aus einem rohrförmigen Träger 22 bestehen, in dem ein Träger 20 axial verschiebbar aufgenommen ist. Am vorderen Ende des Trägers 20 ist ein Verbindungsstück 24 zum Anschluß der Anhängevorrichtung 16 vorgesehen. Ein Anschlußelement 26 befindet sich mit Bezug auf die Fahrtrichtung des Arbeitsgerätes am hinteren Ende des Trägers 22, das in dem Träger 22 ebenfalls axial verschiebbar aufgenommen ist und an dem die Laufradachse 12 befestigt ist. Das Arbeitsgerät besteht aus einem quer verlaufenden Geräterahmen 28 mit zwei auf einer Querebene liegenden, vertikal verschwenkbaren Trägern 30 zur Aufnahme zahlreicher nebeneinander angeordneter Arbeitswerkzeuge bzw. Sammelbehälter 32 zur Aufnahme von Saatgut und Düngemittel.

Ein jeder Träger 30 des Geräterahmens 28 stützt sich über zwei nebeneinander angeordnete Laufräder 34 auf dem Boden ab, die hierzu im Bereich des äußeren Endes des jeweiligen Trägers 30 befestigt sind. Im Bereich des hinteren Endes des Längsträgers 18 ist eine Anschlußplatte 36 befestigt, die beiderseits des Längsträgers 18 hervorsteht und an die mittels Gelenkbolzen 38 und 42 L-förmig ausgebildete Halterungen 40 horizontal schwenkbar angeschlossen sind. Wie aus Fig. 1 hervorgeht, stützen sich somit die Träger 30 über ihre entsprechenden Laufräder 34 und am Längsträger 18 ab, der sich ferner über die Laufradanordnung 10 auf dem Boden abstützt, wenn das Arbeitsgerät seine Arbeitsstellung gemäß Fig. 1 eingenommen hat. In der Arbeitsstellung liegen die Träger 30 auf der gleichen Querebene vor der Laufradachse 12. Die innenliegenden Enden der Träger 30 weisen untereinander einen relativ kurzen Abstand auf und reichen bis zur entsprechenden Außenseite des Längsträgers 18. Der Abstand zwischen den gegenüberliegenden Enden der beiden Träger 30 ist in etwa so groß wie der Abstand der einzelnen Sammelbehälter 32. Die einzelnen Abstände der Sammelbehälter 32 sind untereinander gleich, wobei die Laufradanordnung 10 sich hinter den einzelnen Sammelbehältern 32 befindet.

Eine jede L-förmige Halterung 40 zum entsprechenden Anschluß des Trägers 30 weist einen weiteren mit Bezug auf die Fahrtrichtung des Arbeitsgerätes gemäß Fig. 1 sich in Längsrichtung erstreckenden Gelenkbolzen 41 auf, um den der Träger 30 vertikal schwenken kann und somit im Arbeitseinsatz des Gerätes mittels der Laufräder 34 besser der Bodenkontur folgen kann.

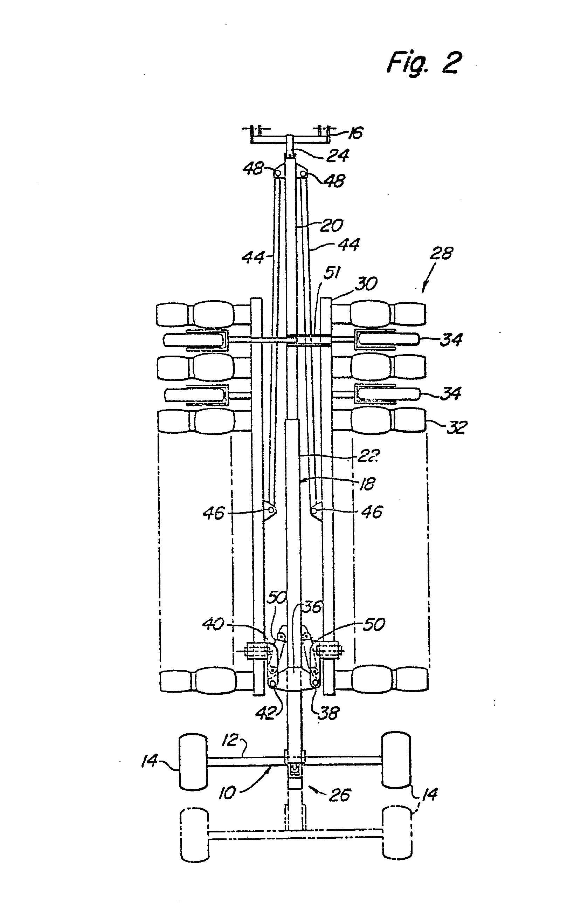

Die beiden Träger 30 des Geräterahmens 28 weisen jeweils eine Halterung zum Anschluß eines Gestänges 44 auf, das hierzu einenends über einen Gelenkbolzen 46 an den Träger 30, anderenends über einen Gelenkbolzen 48 an den axial verschiebbaren Träger 20 gelenkig angeschlossen ist. Die beiden Gestänge 44 des Geräterahmens 28 verlaufen V-förmig zusammen. Zur Verstellung der Träger 30 am in Längsrichtung verlaufenden Träger 18 ist je ein Hydraulikzylinder 50 einenends an die L-förmig ausgebildete Halterung 40, anderenends an den Längsträger 18 angeschlossen. Mittels des Hydraulikzylinders 50 läßt sich ein jeder Träger 30 von einer Stellung gemäß Fig. 1 in eine Stellung gemäß Fig. 2, die der Transportstellung entspricht, horizontal verschwenken. Bei einer Verstellung der Träger 30 in die Transportstellung stützen sich die Träger auf den Laufrädern 34 entsprechend ab. Beim Schwenkvorgang der Träger 30 in die Transportstellung werden die Laufräder 34 entsprechend verstellt, so daß ein ausreichender Bodenabstand des Geräterahmens 28 und der zugehörigen Sammelbehälter 32 vorhanden ist. In der Transportstellung werden die Träger 30 mittels einer Verriegelungsvorrichtung 51 am Träger 20 befestigt.

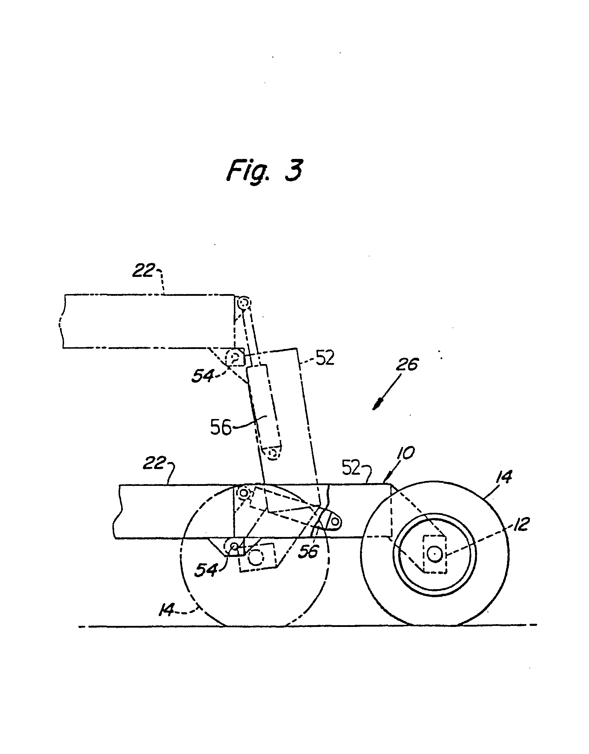

Besonders vorteilhaft ist die Verwendung der Laufradanordnung 10 (Fig. 3) zur Abstützung des hinteren Endes des Längsträgers 18. Wie aus Fig. 3 ferner hervorgeht, ist am hinteren Ende des Trägers 22 mittels eines Gelenkbolzens 54 ein Tragteil 52 vertikal schwenkbar angeschlossen. Die durch den Gelenkbolzen 54 verlaufende Querachse liegt vor den Laufrädern 14. Der Tragteil 52 ist mittels eines Hydraulikzylinders 56 vertikal verschwenkbar, der hierzu einenends an das hintere Ende des Trägers 22, anderenends in etwa mittig an den Tragteil 52 angeschlossen ist. Durch Betätigung des Hydraulikzylinders 56 kann der Tragteil aus der in auszogenen Linien dargestellten Stellung in eine in gestrichelten Linien dargestellte Stellung verschwenkt werden, wobei insbesondere das hintere Ende des Trägers 22 angehoben ist. In dieser Stellung stützt sich der Geräterahmen 28 mit seinen beiden horizontal verschwenkbaren Trägern 30 lediglich auf den Laufrädern 14 und auf der Anhängevorrichtung 16 ab. Somit läßt sich das Arbeitsgerät ohne weiteres in der Transportstellung gemäß Fig. 2 mittels eines Schleppers nach vorne bewegen, ohne daß dabei die Laufräder 34 bzw. die Arbeitsgeräte oder Sammelbehälter 32 einen Bodenkontakt haben. Durch Einfahren der Kolbenstange des Hydraulikzylinders 56 wird der Tragteil 52 wieder in eine horizontal verlaufende Lage zurückverschwenkt, bis die Laufräder 34 ebenfalls wieder einen Bodenkontakt haben und somit das Arbeitsgerät seine Arbeitsstellung einnehmen kann. In dieser Stellung liegt die vordere Stirnfläche des Tragteiles 52 gegen die hintere Stirnfläche des Längsträgers 18 an.

**Patentansprüche**

1. An einen Schlepper anschließbares, landwirtschaftlich nutzbares Arbeitsgerät mit einem zwei horizontal nach vorne in eine Transportstellung verschwenkbare, mit Bezug auf die Fahrtrichtung in der Arbeitsstellung quer verlaufende Träger (30) aufweisenden Geräterahmen (28) zur Aufnahme von Arbeitswerkzeugen oder Sammelbehältern (32), wobei die über Laufräder (34) auf dem Boden abstützbaren Träger (30) an einem auf der Längsmittelebene verlaufenden, mit dem Schlepper verbindbaren Längsträger (18) horizontal schwenkbar angeschlossen sind und hinter den beiden quer verlaufenden Trägern (30) eine Laufräder (14) aufweisende, ebenfalls quer verlaufende Laufradachse (12) mit Bezug auf die Längsmittelebene des Arbeitsgerätes mittig und mittels eines Hydromotors (56) über einen Tragteil (52) höhenverstellbar an den Längsträger (18) angeschlossen ist, dadurch gekennzeichnet, daß der Tragteil (52) in der Arbeitsstellung als rückwärtige Verlängerung des Längsträgers (18) ausgebildet ist und mit seiner nach vorne gerichteten Stirnfläche gegen die nach hinten gerichtete Stirnfläche des Längsträgers (18) anliegt.

2. Arbeitsgerät nach Anspruch 1, dadurch gekennzeichnet, daß der Tragteil (52) in der Arbeitsstellung koaxial zu dem Längsträger (18) ausgerichtet ist und auf der gleichen horizontal verlaufenden Ebene liegt.

3. Arbeitsgerät nach Anspruch 1 oder 2, wobei der Tragteil (52) über einen Gelenkbolzen (54) an den Längsträger (18) und ein Hydraulikzylinder (56) einenends an den Längsträger (18) und anderenends an den Tragteil (52) angeschlossen ist, dadurch gekennzeichnet, daß der Gelenkbolzen im Bereich der unteren gegenüberliegenden Kanten des Längsträgers (18) und des Tragteils (52) vorgesehen ist.

4. Arbeitsgerät nach Anspruch 3, dadurch gekennzeichnet, daß der Gelenkbolzen (54) in der Transportstellung hinter den beiden Trägern (30) zur Aufnahme der Arbeitswerkzeuge bzw. Sammelbehälter (32) angeordnet ist.

5. Arbeitsgerät nach einem oder mehreren der vorherigen Ansprüche, dadurch gekennzeichnet, daß der Tragteil (52) an seinem hinteren Ende mit Bezug auf die Arbeitsstellung nach unten abgewinkelt ist und in der Transportstellung eine in etwa vertikal verlaufende Lage einnimmt.

6. Arbeitsgerät nach einem oder mehreren der vorherigen Ansprüche, dadurch gekennzeichnet, daß der Tragteil (52) als U-Profilträger ausgebildet ist und zwischen seinen Schenkeln den Hydraulikzylinder (56) aufnimmt.

## Claims

1. Agricultural implement attachable to a tractor, with an appliance frame (28) comprising two supports (30) which can be swung horizontally forward into a transport position, extending transversely with respect to the direction of travel in the working position, for the reception of working tools or storage bins (32), wherein the supports (30) supported on the ground by running wheels (34) are connected for horizontal pivoting to a longitudinal support (18) running along the longitudinal central plane and connectible to the tractor, and behind the two transversely extending supports (30) there is connected to the longitudinal support (18), by means of a support part (52), centrally with respect to the longitudinal central plane, a running wheel axle (12) with running wheels (14), likewise extending transversely and adjustable in height by means of a hydro-motor (56), characterized in that the support part (52) is formed as a rearward prolongation of the longitudinal support (18) in the working position and abuts with its forwardly directed frontal surface against the rearwardly directed frontal surface of the longitudinal support (18).

2. Implement according to claim 1, characterized in that the support part (52) is directed coaxially to the longitudinal support (18) in the working position and lies in the same horizontally extending plane.

3. Implement according to claim 1 or 2, wherein the support part (52) is connected by a hinge pin (54) to the longitudinal support (18) and a hydraulic cylinder (56) is connected at one end to the longitudinal support (18) and at the other end to the support part (52), characterized in that the hinge pin is provided in the region of the lower opposed edges of the longitudinal support (18) and the support part (52).

4. Implement according to claim 3, characterized in that the hinge pin (54) is arranged in the transport position behind the two supports (30) for the reception of working tools or storage bins (32).

5. Implement according to one or more of the preceding claims, characterized in that the support part (52) is downwardly angled at its rear end with regard to its working position and assumes an approximately vertical position in the transport position.

6. Implement according to one or more of the preceding claims, characterized in that the support part (52) is formed as a U-section support and receives the hydraulic cylinder between its flanges.

## Revendications

1. Instrument utilisable en agriculture, pouvant être attelé à un tracteur, comportant un bâti (28) comportant deux entretoises (30) pouvant pivoter horizontalement vers l'avant pour prendre une position de transport, dirigées transversalement par rapport à la direction de déplacement en position de travail, pour recevoir des outils de travail ou des réservoirs collecteurs (32), les entretoises (30) pouvant s'appuyer sur le sol par l'intermédiaire de roues d'appui (34) étant raccordées de façon à pouvoir pivoter horizontalement à un longeron (18) s'étendant dans le plan de symétrie longitudinal, pouvant être relié au tracteur, et derrière les deux entretoises (30) dirigées transversalement, un essieu de roues d'appui (12) comportant des roues d'appui (14), dirigé également transversalement, raccordé au longeron (18) de façon à pouvoir être déplacé en hauteur par rapport au plan de symétrie longitudinal de l'instrument centralement et au moyen d'un moteur hydraulique (56), par l'intermédiaire d'un élément de support (52), caractérisé en ce que l'élément de support (52) se présente, dans la position de travail, sous forme d'un prolongement postérieur du longeron (18) et s'appuie, par sa face frontale dirigée vers l'avant, contre la face frontale du longeron (18) dirigée vers l'arrière.

2. Instrument suivant la revendication 1, caractérisé en ce que l'élément de support (52) est orienté, dans la position de travail, coaxialement au longeron (18) et se trouve dans le même plan horizontal.

3. Instrument suivant la revendication 1 ou 2, l'élément de support (52) étant raccordé au longeron (18) par l'intermédiaire d'un axe d'articulation (54) et un vérin hydraulique (56) étant raccordé par une extrémité au longeron (18) et par l'autre extrémité à l'élément de support (52), caractérisé en ce que l'axe d'articulation est prévu au voisinage des bords inférieurs opposés du longeron (18) et de l'élément de support (52).

4. Instrument suivant la revendication 1, caractérisé en ce que l'axe d'articulation (54) est disposé, dans la position de transport, derrière les deux entretoises (30) pour la réception des outils de travail ou des réservoirs collecteurs (32).

5. Instrument suivant une ou plusieurs des revendications précédentes, caractérisé en ce que l'élément de support (52) est replié vers le bas à son extrémité postérieure en se référant à la position de travail, et prend, dans la position de transport, une position orientée sensiblement verticalement.

6. Instrument suivant une ou plusieurs des revendications précédentes, caractérisé en ce que l'élément de support (52) se présente sous forme d'un support à profil en U et reçoit le vérin hydraulique (56) entre ses branches.

Fig. 1

Fig. 2

EP 0 147 832 B1

Fig. 3

11